# EUROPÄISCHE PATENTSCHRIFT

(11) **EP 2 739 518 B1**
(45) Veröffentlichungstag und Bekanntmachung des Hinweises auf die Patenterteilung: **12.10.2016**
(21) Anmeldenummer: 12756083.7
(22) Anmeldetag: 03.08.2012
(51) Int. Cl.: B62D 1/20, F16D 1/08, F16D 3/38

(54) **LENKSPINDELANORDNUNG**
STEERING SPINDLE ARRANGEMENT
SYSTÈME D'ARBRE DE DIRECTION

(30) Priorität: 06.08.2011 DE 102011109689
(43) Veröffentlichungstag der Anmeldung: 11.06.2014
(73) Patentinhaber: Daimler AG, 70327 Stuttgart (DE)
(72) Erfinder: HEBENSTREIT, Axel, 70569 Stuttgart (DE); LÖFFLER, Hans-Dieter, 72766 Reutlingen (DE); MEYER, Thorsten, 72218 Wildberg (DE)
(74) Vertreter: JENSEN & SON
(86) Internationale Anmeldenummer: PCT/EP2012/003320
(87) Internationale Veröffentlichungsnummer: WO 2013/020685

(56) Entgegenhaltungen:
- EP-A1- 0 300 890
- FR-A1- 2 933 363
- JP-A- 10 205 545
- US-A- 5 779 385

## Beschreibung

Die Erfindung betrifft eine Lenkspindelanordnung eines Kraftfahrzeugs an der Schnittstelle der Lenkspindel mit der Lenkungskupplung.

Die bislang durchgeführte Direktverschraubung der Lenkspindel unten mit der Lenkungskupplung ist im Packageumfeld aus Abgasanlage, Katalysatoren, Motor und Leitungen nur mit erheblichem Aufwand möglich. Dabei wird die Lenkspindel unten mit der Lenkungskupplung quer zur Lenkspindelrichtung verschraubt. Dies hat zum einen den Nachteil der schlechten Zugänglichkeit, zum anderen erhöht sich die Variantenanzahl bei Optimierung der Zugänglichkeit für unterschiedliche Motorvarianten und Lenkungslagen, etwa Links- und Rechtslenkermodelle, und zusätzlich können Standardmontagereihenfolgen, wie etwa der Zeitpunkt der Montage der Abgasanlage kaum oder gar nicht eingehalten werden. Bei einem anderen Ansatz der Gestaltung der Vorrichtung wird auf das Lenkungskupplungsteil verzichtet und nur die Lenkspindel unten verwendet, wobei hier allerdings nachteilig ein Hochfahren des Motors in Z-Richtung während der Hochzeit, der Zusammenführung der vormontierten Motor-/Getriebe- und Fahrwerkseinheit, nicht möglich ist.

So beschreibt die DE 10 2008 006 497 A1 eine Montageanordnung zum Verbinden einer Lenkspindel mit einer Lenkungskupplung. Das Endstück der Lenkspindel wird in einen endseitigen Aufnahmebereich der Lenkungskupplung eingeführt, wobei die Montageanordnung eine Vorrichtung umfasst, um im Wesentlichen das koaxiale Ausrichten der Lenkspindel und der Lenkungskupplung zu leisten. So wird das automatisierte Zusammenführen der Lenkspindel mit der Lenkungskupplung ermöglicht, da ein manuelles koaxiales Ausrichten der Lenkspindel und der Lenkungskupplung vermeidbar ist. Dazu weist die Lenkspindel dort ein endseitiges Hakenelement auf, in das eine Zugbandschlaufe, die aus dem endseitigen Aufnahmebereich der Lenkungskupplung herausragt, vor der Hochzeit eingehängt wird. Durch Ziehen an der Schlaufe des Zugbandes wird das Hakenelement zusammen mit dem Endstück der Lenkspindel in den endseitigen Aufnahmebereich der Lenkungskupplung eingeführt, um dort verschraubt zu werden.

Die DE 10 2005 006 251 A1 adressiert das Problem, die Montage einer Lenkspindel an einem Kraftfahrzeug zu vereinfachen. Dazu weist die Lenkspindel, die einenends mit einem Lenkrad und anderenends über eine Lenkungskupplung mit einem Lenkgetriebe verbindbar ist, einen Zylinderkörper und einen darin teleskopierbar eingesteckten Kolbenstangenkörper auf. Die Lenkspindel hat einen Pneumatikanschluss, der mit einem Zylinderraum kommuniziert, der im Zylinderkörper angeordnet ist und vom Kolbenstangenkörper axial begrenzt ist, wobei der Kolbenstangenkörper durch eine Druckbeaufschlagung des Zylinderraums aus dem Zylinderkörper ausgetrieben wird. So muss das für die Anbindung an die Lenkungskupplung vorgesehene Spindelende nicht von Hand in den Motorraum hineingezogen werden, sondern kann durch die Druckbeaufschlagung in den Motorraum eingefahren werden, ohne dass es hierzu erforderlich ist, das genannte Spindelende zu berühren. Auch hier werden Lenkspindelende und Lenkungskupplung quer zur Lenkspindelrichtung verschraubt.

Aufgrund der engen Bauraumverhältnisse steht der Lenkungsstrang der Montage des Motormoduls mit der Karosserie normalerweise im Weg. Die Bereitstellung eines Zwischenstücks, das die Lenkungskupplung mit dem Ende der Lenkspindel verbindet, ermöglicht, dass dieses an der Schnittstelle, an der es mit dem Lenkspindelende verschraubt ist, im losen Zustand, d. h. unverschraubt, weggeschwenkt werden kann, um die Montage des Motormoduls zu erleichtern. Die Lenkspindel kann in Lenkradrichtung ein Stück weit zurückgeschoben werden. Nach der Montage des Motors muss das Zwischenstück wieder mit dem Lenkspindelende verbunden werden. Dies ist für den Monteur extrem schwer, da der Bauraum für eine handwerkliche Betätigung kaum Spielraum lässt und die Verbindungspartner optisch schlecht erfassbar sind.

Aus der EP0 300 890 A1 ist eine Kupplung einer Lenkspindel mit einer Gelenkgabel bekannt, die unter Zusammenwirkung einer formschlüssigen Drehmoment übertragenden Steckverbindung und einer Spannvorrichtung auf engem Raum bewerkstelligt werden kann. Die Steckverbindung wird damit erreicht, dass das Lenkspindelende pyramidenförmig ausgebildet ist und in eine Buchse der Gelenkgabel eintaucht, die eine entsprechende Gegenform aufweist Zur Verriegelung der Steckverbindung weist die Kupplung Raststifte auf, die in der Buchse radial geführt sind und in Rastlöcher mit abgeschrägten Flanken fallen, die radial an der Lenkspindel ausgebildet sind. Die Raststifte werden von einem Ring beaufschlagt, der wiederum von einer die Spannvorrichtung bildenden Druckfeder abgestützt ist. Der Ring kann zusätzlich eine wendelförmige Nut besitzen in die der Stiftkopf eingreift, wobei durch Drehen des Rings der Stift am Ring bajonettverschlussartig festgelegt wird.

Ausgehend von diesem Stand der Technik ergibt sich die Aufgabe, nicht nur das Zusammenführen von Lenkspindelende und Lenkungskupplung zu vereinfachen, sondern auch eine Anordnung zu schaffen, die ermöglicht, dass die zusammengeführten Lenkspindel- und Lenkungskupplungsenden in der richtigen Relativlage zueinander verbunden werden.

Diese Aufgabe wird durch eine Lenkungsanordnung mit den Merkmalen des Anspruchs 1 gelöst. Weiterbildungen der Vorrichtung sind in den Unteransprüchen ausgeführt.

Eine erste Ausführungsform der erfindungsgemäßen Lenkungsanordnung weist eine Lenkspindel mit einem Lenkspindelanschluss auf, der über ein Zwischenstück mit nabenartiger Ausführung mit einem Gabelkopf einer Lenkungskupplung verbunden ist. Dabei sind der Lenkspindelanschluss und das Zwischenstück an einander zugewandten Enden erfindungsgemäß als Steckpartner ausgebildet, zu welchem Zweck sie mit zumindest einem längsaxial orientierten Nut- und Feder-Führungselementepaar ausgestattet sind, das eine Drehmoment übertragende Zwangsführung bereitstellt. Ein erstes Führungselement des Führungselementepaares ist an dem Lenkspindelanschluss und ein zweites, mit dem ersten korrespondierendes Führungselement, ist an dem Zwischenstück angeordnet. Zudem stellt die Lenkungsanordnung eine Spannvorrichtung bereit, die die Steckpartner in einer Stecklage gegeneinander verspannt.

Aufgrund der erfindungsgemäßen Führungselemente, die von einem Monteur ohne weiteres ertastbar und/oder sichtbar sind, können die Lenkspindel und das Zwischenstück der Kupplung in vorteilhaft einfacher Weise zusammengeführt werden, wobei sie durch die vorgegebene Führung immer die richtige Relativlage zueinander einnehmen. Die Spannvorrichtung verbindet die Steckpartner aufgrund der Anpresskraft so, dass ungewolltes Lösen der Steckpartner im Fahrbetrieb unterbunden wird.

Die durch Nut und Feder gebildeten Führungselemente erstrecken sich ausschließlich längs der Lenkspindelachse. Daher wird eine klemmfreie und für den Monteur leicht auszuführende Handhabbarkeit der Steckpartner zum Erreichen der Steckverbindung ermöglicht.

So kann der Lenkspindelanschluss an seinem dem Zwischenstück zugewandten Ende auf seiner zylindrischen Außenseite als Führungselement(e) eine oder mehrere längsaxial orientierte Nut(en) aufweisen, während das Zwischenstück an seinem dem Lenkspindelanschluss zugewandten Ende an seiner zylindrischen Innenseite mit einer oder entsprechend mehreren korrespondierenden Feder(n) ausgestattet ist, wobei zumindest für jede Feder eine Nut an dem Lenkspindelanschluss vorliegt. Generell ist natürlich auch denkbar, die Nuten im Zwischenstück und die Federn am Lenkspindelanschluss vorzusehen, oder beides an beiden Steckpartnern wechselweise anzuordnen. Hierbei ist darauf zu achten, dass sich die Nuten in ihrer Breite untereinander unterscheiden. Dies gilt selbstverständlich ebenfalls für die entsprechenden formnegativ ausgebildeten Federn. Damit wird ermöglicht, dass die gewünschte Winkellage der Steckpartner bei der Montage gewährleistet ist. In Falschlage sind die Steckpartner nicht steckbar, was der Monteur taktil und/oder optisch sofort erkennt.

An dieser Stelle sei darauf hingewiesen, dass auch eine Vertauschung der Steckformen von Lenkspindel und Lenkungskupplung möglich ist. Mit anderen Worten kann die Lenkspindel an ihrem Ende die Nabe (Zwischenstück) aufweisen und die Lenkungskupplung an ihrem mit der Lenkspindel zu verbindenden Ende als Keilwelle ausgeführt sein.

Erfindungsgemäß ist in der Ausführungsform, in der die Nut(en) an dem Lenkspindelanschluss vorliegen, vorgesehen, dass zumindest eine längsaxiale Nut an ihrem dem Zwischenstück abgewandten Ende in eine umfängliche Ringnut mündet, während das Zwischenstück eine Hülse trägt, die relativ zu dem Zwischenstück beweglich ist und die an einem lenkspindelseitigen Ende einen oder mehrere sich von dem Rand der Hülse radial nach innen erstreckenden Überstände aufweist, die in der Stecklage in die durch ihre kupplungsseitige Flanke einen Anschlag bildende Ringnut eingreift. Die Spannvorrichtung ist dabei so ausgebildet, dass sie die Anschläge gegeneinander presst.

In einer bevorzugten Ausführungsform weisen die Steckpartner drei um 120° versetzt zueinander angeordnete, längsaxial orientierte Nuten bzw. Federn auf, wodurch von den Steckpartnern in ihrer endgültigen Steckposition auch höhere Drehmomente vorteilhaft schadensfrei übertragen werden können.

Ferner können diese Überstände zahnförmig ausgebildet sein, wobei sie in einer Längsnut, insbesondere in der als Führungselement dienenden Nut des Lenkspindelanschlusses verfahrbar sind, wodurch die Hülse axial geführt ist. Die Hülse kann nach Durchlaufen der axialen Nut in der Ringnut in Umfangsrichtung in eine Drehlage gedreht werden, aus der eine axiale Rückverschiebung nicht mehr möglich ist. Die als Anschläge dienenden Vorsprünge können mit einer Anzahl von drei vorgesehen sein, die in Umfangsrichtung um 120° voneinander versetzt sind, so dass eine Kipplage der Hülse auf dem Lenkspindelanschluss unterbunden wird.

An dem kupplungsseitigen Ende der Hülse kann eine innenumfängliche Nut vorgesehen sein, in die ein Sicherungsring eingelegt ist. Dieser kommt an einem Anschlag zur Anlage der durch eine stufenförmige Verjüngung gebildet wird, die das Zwischenstück an einem Abschnitt, der von dem kupplungsseitigen Ende der Hülse umgeben ist, aufweist.

Die Spannvorrichtung, die die Steckpartner aneinanderpresst, kann in einer Ausführungsform einen abkragenden Ringbund, der sich von dem lenkspindelseitigen Ende an dem Zwischenstück radial auswärts erstreckt, eine Schraubenfeder, die um das Zwischenstück anliegt und die sich einenends an den Ringbund abstützt, und eine Sperrvorrichtung umfassen, die die Schraubenfeder in einer vorgespannten Position lösbar zurückhält. In einer gelösten Schraubenfederanordnung liegt die Schraubenfeder hingegen an dem in der Nut der Hülse angeordneten Sicherungsring an. So wird durch Lösen der Sperrvorrichtung in einfacher Weise in einer sehr kompakten Bauform die Spannvorrichtung ausgelöst, die selbsttätig durch Abgabe ihrer Spannenergie die Steckpartner miteinander verspannt.

Als Sperrvorrichtung für die Schraubenfeder, um diese in der stark vorgespannten Position zu halten, kann in einer Ausführungsform ein Sicherungssplint vorgesehen sein, der radial in ein Langloch, das umfänglich orientiert an der Hülse vorliegt, eingeführt und eine radiale Durchtrittsöffnung des Zwischenstücks durchdringend lösbar positioniert ist. Die radiale Durchtrittsöffnung liegt an dem Abschnitt des Zwischenstücks vor, der von dem kupplungsseitigen Ende der Hülse umgeben ist. Das Langloch der Hülse ist dabei über einem Einlass der radialen Durchtrittsöffnung angeordnet. Nach Erreichen der gewünschten Steckposition der beiden Steckpartner und einer erhaltenen Drehlage der Hülse wird zum Lösen der Sperrvorrichtung der Splint manuell von außen gezogen. Durch die Freigabe der Abstützung des Endes der Schraubenfeder expandiert diese in Längsrichtung und zieht die Anschlagflächen der Vorsprünge mit der Ringnutflanke gegeneinander.

Damit der Lenkspindelanschluss in das von der Hülse umgebene Zwischenstück, in dem die Federspannvorrichtung mittels des Splints in gespannter Position gehalten wird, eingeführt werden kann, ist an seinem kupplungsseitigen Ende eine zum Ende hin offene Ausnehmung zur Aufnahme des Sicherungssplints vorgesehen, wobei die Ausnehmung hinsichtlich ihrer Durchtrittsrichtung in der Stecklage mit der Durchtrittsöffnung des Zwischenstücks fluchtet.

Eine zu dem Splint alternative Sperrvorrichtung besteht in einem Rastmechanismus, der im Zwischenstück angeordnet ist und der durch eine kupplungsseitige Stirnseite des in das Zwischenstück aufzunehmenden Endes des Lenkspindelanschluss betätigt wird. Der Rastmechanismus weist dabei eine Rastvorrichtung, wie eine Rastnase oder eine Klinke, auf, die die Schraubenfeder in der vorgespannten Position hält. Die Betätigung des Rastmechanismus durch die eingeführte Stirnseite des Lenkspindelanschluss bewirkt eine Überführung der Schraubenfeder in die gelöste Schraubenfederanordnung. Dadurch ist eine manuelle Betätigung der Sperrvorrichtung nicht mehr von Nöten.

Schließlich beziehen sich vorteilhafte Ausführungsformen der Lenkungsanordnung darauf, dass die Führungsnut eine Fangvorrichtung aufweist, die durch eine keilförmige Aufweitung der Nut an einer Einführungsöffnung für die Feder gebildet wird. Alternativ kann auch eine spitz zulaufende Ausführung der Feder einen vergrößerten Fangbereich darstellen. Somit kann der mit der Feder ausgestattete Steckpartner automatisch in die richtige Steckposition geführt werden, wenn dieser in Umfangsrichtung leicht versetzt am Steckpartner mit der Nut angesetzt wird. Sind mehrere Nuten an einem Steckpartner vorgesehen, so weisen eine Nut und die entsprechende Feder die Fangvorrichtung auf, womit eine Vorzugsrichtung in Umfangsrichtung vorgegeben ist.

Zusätzlich oder alternativ kann die Führungsnut in ihrem Formverlauf mit der Feder abgestimmt sein, wobei die Nut insbesondere über ihre gesamte Länge hinweg eine Doppelkeilform aufweist: Die Flanken der Nut streben in radialer Richtung zur Feder hin schräg auseinander und/oder die Nut verjüngt sich in längsaxialer Richtung ausgehend von der Einführungsöffnung. Durch die Doppelkeilform wird bei einer Verspannung der Steckpartner ein besonders starker Halt der Steckverbindung auf Grund der erreichten Keilklemmung geschaffen. Sind die Nuten (und die Federn) doppelkeilförmig ausgebildet, so ist bei noch nicht ausgelöster Spannvorrichtung der Anschlag vom Gegenanschlag axial beabstandet, so dass bei Auslösung der Spannvorrichtung durch Freigabe der Sperrvorrichtung zuerst die Keilflächen von Nut und Feder sich gegeneinander verklemmen können, bis die Anschläge aneinander zur Anlage kommen.

Diese und weitere Vorteile werden durch die nachfolgende Beschreibung unter Bezug auf die begleitenden Figuren dargelegt. Der Bezug auf die Figuren in der Beschreibung dient der Unterstützung der Beschreibung und dem erleichterten Verständnis des Gegenstands. Die Figuren sind lediglich eine schematische Darstellung einer Ausführungsform der Erfindung.

### Dabei zeigen:

- Fig. 1: eine perspektivische Ansicht des Lenkspindelanschlusses,
- Fig. 2: eine perspektivische Ansicht der Hülse,
- Fig. 3: eine perspektivische Ansicht des Zwischenstücks,
- Fig. 4: eine Längsschnittansicht von Lenkspindelanschluss, Hülse und Zwischenstück in Steckanordnung,
- Fig. 5: eine Querschnittansicht durch Lenkspindelanschluss, Hülse und Zwischenstück in Steckanordnung.

Die erfindungsgemäße Vorrichtung bezieht sich auf eine Lenkungsanordnung mit einem Zwischenstück in nabenartiger Ausführung, das den Gabelkopf der Lenkungskupplung mit dem Lenkspindelanschluss verbindet.

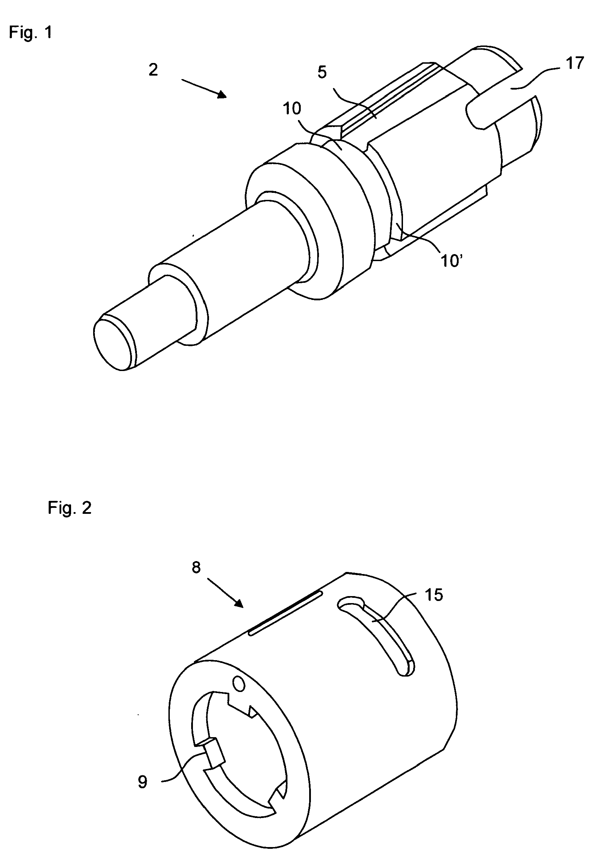

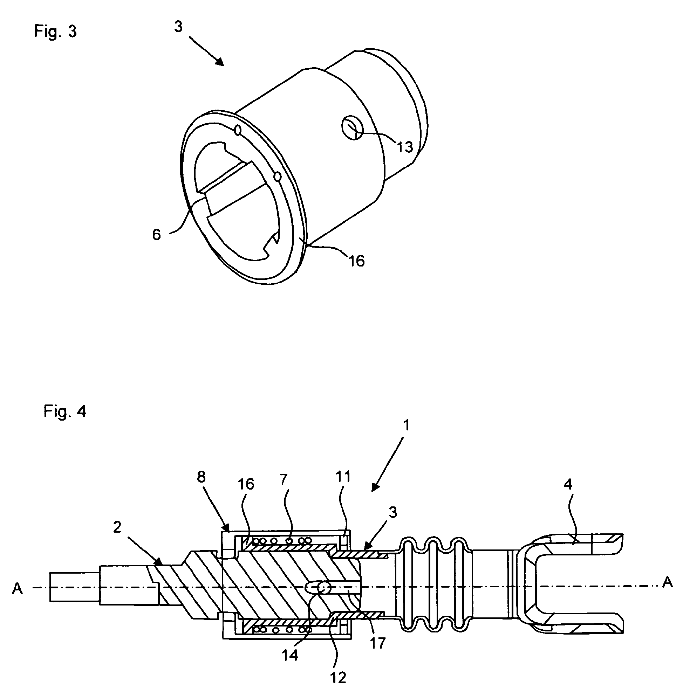

In Fig. 4 ist eine Ausführungsform einer solchen Lenkungsanordnung 1 zu sehen. Die einander zugewandten Enden des Zwischenstücks 3 und des Lenkspindelanschlusses 2 der Lenkspindel sind als Steckpartner ausgebildet, die miteinander zusammenwirkende Führungselemente 5,6 (vgl. Fig. 1 und Fig. 3) aufweisen und eine Drehmoment übertragende Zwangsführung bereitstellen. Ferner stellt die Lenkungsanordnung 1 eine Spannvorrichtung bereit, mittels derer die Steckpartner in einer Stecklage gegeneinander verspannbar sind, und die in Fig. 4 durch die Schraubenfeder 7 realisiert ist, welche eine spielfreie Verbindung ermöglicht.

Aufgrund der Führungselemente, in den Fig. 1 und 3 beispielhaft als Nuten 5 und Federn 6, gezeigt, die vom Monteur bei der Montage ohne Weiteres ertastbar und sichtbar sind, können der Lenkspindelanschluss 2 und das Zwischenstück 3 in einfacher Weise zusammengeführt werden, wobei sie durch die vorgeschriebene Führung immer die richtige Relativlage zueinander einnehmen. Die Spannvorrichtung, hier eine Schraubenfeder 7, verbindet die Steckpartner 2,3 aufgrund der Anpresskraft so, dass wie unten beschrieben mittels eines Formschlusses eine ungewollte Lösung der Steckpartner im Fahrbetrieb unterbunden wird.

Vorliegend werden die Führungselemente durch drei Nuten 5 und drei Federn 6 (oder auch Schienen) gebildet, die sich ausschließlich längs der Lenkspindelachse A-A erstrecken. Somit wird eine klemmfreie für den Monteur leicht auszuführende Handhabbarkeit der Steckpartner 2,3 zum Erreichen der Steckverbindung ermöglicht. Andere Führungselemente sind im Sinne der Erfindung ebenfalls denkbar.

Im Nachfolgenden wird die Steckverbindung anhand der in den Figuren dargestellten Ausführungsform erläutert, in der die Nuten 5 an dem Lenkspindelanschluss 2 und die Federn 6 an dem Zwischenstück 3 vorliegen. Sollte eine entsprechend umgekehrte Anordnung von Nut und Feder vorgesehen sein, so können die Weiterbildungen vom Fachmann ohne weiteres übertragen werden.

Ferner kann die Lenkungsanordnung 1 eine Fangvorrichtung für die beiden Steckpartner 2,3 aufweisen, die insbesondere dadurch gebildet wird, dass die Führungsnut 5 zumindest an der Einführungsöffnung keilförmig auseinanderläuft. Somit kann der mit der Feder 6 ausgestattete Steckpartner automatisch in die richtige Steckposition geführt werden, wenn dieser in Umfangsrichtung leicht versetzt am Steckpartner mit der Nut 5 angesetzt wird.

Vorzugsweise weisen die Steckpartner 2,3, wie in Fig. 1 und 3 dargestellt, jeweils drei Nuten 5 bzw. drei Federn 6 auf, die am Außen- bzw. Innenumfang um 120° versetzt zueinander angeordnet sind. Hierdurch können von den Steckpartnern 2,3 in ihrer endgültigen Steckposition auch höhere Drehmomente schadensfrei übertragen werden. Eine Nut 5 und die entsprechende Feder 6 können dabei die Fangvorrichtung aufweisen, so dass eine Vorzugsrichtung in Umfangsrichtung vorgegeben ist.

Ferner können Nut 5 und Feder 6 in ihrem Formverlauf weitgehend aufeinander abgestimmt sein, wobei die Nut 5 über ihre gesamte Länge hinweg eine Doppelkeilform aufweist, d. h., dass die Nutflanken schräg auseinander streben. Hierdurch wird bei einer Verspannung der Steckpartner 2,3 ein besonders starker Halt der Steckverbindung aufgrund der erreichten Keilklemmung geschaffen.

Vorzugsweise trägt der aufnehmende Steckpartner, hier das Zwischenstück 3, unverlierbar eine zu diesem relativ bewegliche Hülse 8, die in einer Stecklage der Steckpartner 2,3 mit zumindest einem an der Innenseite ausgebildeten Anschlag 9 (siehe Fig. 2) einen Gegenanschlag 10' des aufzunehmenden Partners, hier des Lenkspindelanschlusses 2 hintergreift, wobei die Spannvorrichtung 7 die Anschläge 9,10' gegeneinander presst.

Vorzugsweise ist bei noch nicht ausgelöster Spannvorrichtung der Anschlag 9 vom Gegenanschlag 10' axial beabstandet, so dass bei Auslösung der Spannvorrichtung 7 zuerst die die Anschläge 9,10' aneinander zur Anlage kommen, wonach sich die Keilflächen von Nut 5 und Feder 6 gegeneinander verklemmen können.

Der Anschlag 9 der Hülse 8 ist als zahnartiger Vorsprung 9 ausgebildet und kann in einer Längsnut, insbesondere in der als Führungselement dienenden Nut 5 des Lenkspindelanschlusses 2 verfahren werden, womit die Hülse 8 axial geführt ist.

Der Gegenanschlag wird durch die Flanke 10' einer Ringnut 10 gebildet, in die die als Führungselement dienende axiale Nut 5 des Lenkspindelanschlusses 2 einläuft. Die Hülse 8 erhält nach Durchlaufen der axialen Nut 5 infolge einer Drehung in Umfangsrichtung eine Drehlage, aus der eine axiale Rückverschiebung nicht mehr möglich ist.

Die hier dargestellten drei in Umfangsrichtung voneinander um 120° versetzten Anschläge 9 vermeiden eine Kipplage der Hülse 8 auf dem Lenkspindelanschluss 2.

Die Spannvorrichtung 7 ist, wie in Fig. 4 zu sehen, durch eine Schraubenfeder 7 gebildet, die das aufnehmende Zwischenstück 3 trägt und die sich mit einem Ende gegen einen nach außen abkragenden Ringbund 16 des Zwischenstücks 3 abstützt, wobei sie sich mit dem anderen Ende im gespannten Zustand an der Sperrvorrichtung, hier am Sicherungssplint 14, und im gelösten Zustand an dem Sicherungsring 11 der Hülse 8 abstützt.

Dieser Sicherungsring 11 ist im Endbereich der Hülse 8 angeordnet, der den am anderen Ende ausgebildeten Anschlägen 9 gegenüberliegt. Durch Entsperren der Sperrvorrichtung wird in einfacher Weise in einer sehr kompakten Bauform die Spannvorrichtung 7 ausgelöst, die selbsttätig durch Abgabe ihrer Spannenergie die Steckpartner miteinander verspannt.

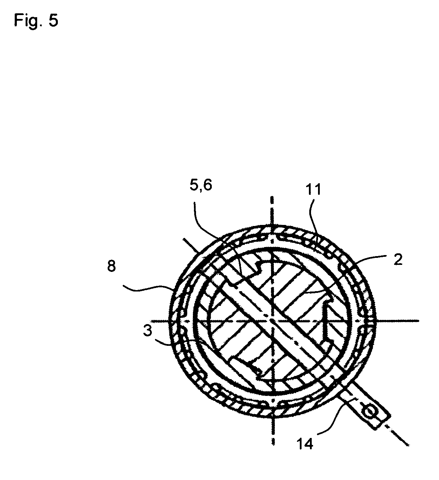

Der Sicherungsring 11 ist hier beispielhaft als Sprengring 11 ausgebildet. In einer Variante, die im Querschnitt in Fig. 5 skizziert ist, ist ein Ring 11 mit scharfer Außenverzahnung vorgesehen, dessen Zähne sich bei einer in einer axialen Vorzugsrichtung wirkenden Kraft in das Material seines Trägerkörpers 8 eingraben und somit eine Abstützung mit hoher Widerstandskraft bilden.

Das Sperrelement der Verriegelungsvorrichtung kann, wie in Fig. 4, ein Splint 11 sein, der eventuell mit einem Abzugsring ausgestattet sein kann, und der ein in Umfangsrichtung verlaufendes Langloch 15 der Hülse 8 (vgl. Fig.2) und eine Umfangsöffnung 13 des aufnehmenden Zwischenstücks 3 (vgl. Fig. 3) durchsetzt, wobei nach Erreichen der gewünschten Steckposition der beiden Steckpartner 2,3 und Drehlage der Hülse 8 der Splint 11 manuell von außen gezogen wird. Durch die Freigabe des Langloches 15, der Öffnung 13 und vor allem der Abstützung des Endes der Schraubenfeder 7 expandiert diese in Längsrichtung und zieht die Anschlagflächen 9,10' sowie die Keilflächen von Nut 5 und Feder 6 der Steckpartner 2,3 gegeneinander.

Eine nicht dargestellte elegante Sperrvorrichtung stellt eine Rastvorrichtung dar, die im aufnehmenden Steckpartner, dem Zwischenstück 3, angeordnet ist und die durch die Stirnseite des in das Zwischenstück 3 eintauchenden Endes des anderen Steckpartners, dem Lenkspindelanschluss 2 betätigt wird. Die Sperrvorrichtung, die eine Raste, Klinke oder ähnliches sein kann und die bis dahin die Schraubenfeder 7 gesperrt hat, wird ausgerastet, wonach die Feder 7 freigegeben wird. Dadurch ist eine manuelle Betätigung der Sperrvorrichtung nicht mehr von Nöten. Vielmehr erfolgt diese durch die Einschiebebewegung der Steckpartner 2,3 ineinander nach Erreichen der geeigneten Drehlage der Hülse 8.

Schließlich kann eine optische Montagekontrolle (figurativ nicht dargestellt) vorgesehen sein, die dem Monteur automatisch vermittelt, ob die Montage korrekt ausgeführt wurde. Hierzu kann beispielsweise ein farbiger Stift verwendet werden, der mit einer Windung der Schraubenfeder am Ringbund des aufnehmenden Steckpartners verbunden ist. Solange die Schraubenfeder gespannt ist, wird der Stift aus seiner Führung teilweise hinausgetrieben und ist sichtbar. Entspannt sich die Schraubenfeder, hebt die Windung sich vom Ringbund etwas ab, wodurch der Stift mitgeführt wird. Der Stift wird in seine Führung vollends hineingezogen und ist nicht mehr sichtbar. Daran erkennt der Monteur, dass die Montage fachgerecht durchgeführt wurde und die Steckverbindung in gewünschter Weise erzielt ist.

## Patentansprüche

1. Lenkungsanordnung (1), die eine Lenkspindel mit einem Lenkspindelanschluss (2) aufweist, der über ein Zwischenstück (3) mit einem Gabelkopf (4) einer Lenkungskupplung verbunden ist,
wobei der Lenkspindelanschluss (2) und das nabenartig ausgebildete Zwischenstück (3) an einander zugewandten Enden mittels zumindest eines längsaxial orientierten Nut- und Feder-Führungselementepaares (5,6), das eine Drehmoment übertragende Zwangsführung bereitstellt, als Steckpartner ausgebildet sind, wobei an dem Lenkspindelanschluss (2) ein erstes Führungselement (5,6) und an dem Zwischenstück (3) ein zweites Führungselement (5,6) des Führungselementepaares (5,6) angeordnet ist, dass
eine Spannvorrichtung bereitgestellt ist, die die Steckpartner in einer Stecklage gegeneinander verspannt, **dadurch gekennzeichnet, dass** zumindest eine längsaxiale Nut (5) an ihrem dem Zwischenstück (3) abgewandten Ende in eine an dem Lenkspindelanschluss (2) bereitgestellte umfängliche Ringnut (10) mündet, dass
das Zwischenstück (3) eine relativ zu dem Zwischenstück (3) bewegliche Hülse (8) trägt, die an einem lenkspindelseitigen Ende der Hülse (8) einen oder mehrere sich von dem Rand der Hülse (8) radial nach innen erstreckenden Überstände (9) aufweist, der in der Stecklage in die Ringnut (10) eingreift, die durch ihre kupplungsseitige Flanke (10') einen Anschlag bildet, und dass die Spannvorrichtung so ausgebildet ist, dass sie die von der Flanke (10') und der Überstände (9) gebildeten Anschläge gegeneinander presst.

2. Lenkungsanordnung (1) nach Anspruch 1,
**dadurch gekennzeichnet, dass**
an der zylindrischen Außenseite des Endes des Lenkspindelanschlusses (2), das dem Zwischenstück (3) zugewandt ist, zumindest eine, bevorzugt mehrere, besonders bevorzugt drei um 120° versetzt zueinander angeordnete, längsaxial orientierte Nuten (5) vorgesehen sind,
und dass an dem Zwischenstück (3) zumindest eine oder mehrere längsaxiale orientierte Federn (6) bereitgestellt sind, wobei für jede Feder (6) eine Nut (5) an dem Lenkspindelanschluss (2) vorliegt.

3. Lenkungsanordnung (1) nach Anspruch 2,
**dadurch gekennzeichnet, dass**
die Überstände (9) zahnförmig ausgebildet sind.

4. Lenkungsanordnung (1) nach einem der Ansprüche 2 oder 3,
**dadurch gekennzeichnet, dass**
an dem kupplungsseitigen Ende der Hülse (8) eine innenumfänglichen Nut vorgesehen ist, in die ein Sicherungsring (11) eingelegt ist, und dass
das Zwischenstück (3) dem Abschnitt, der von dem kupplungsseitigen Ende der Hülse (8) umgeben ist, eine stufenförmige Verjüngung (12) aufweist, die in der Steckanordnung einen Anschlag für den Sicherungsring (11) bildet.

5. Lenkungsanordnung (1) nach zumindest einem der Ansprüche 1 bis 4,
**dadurch gekennzeichnet, dass**
die Spannvorrichtung
- einen abkragenden Ringbund (16), der sich an dem Zwischenstück (3) radial auswärts erstreckt, und
- eine Schraubenfeder (7), die um das Zwischenstück (3) anliegt und die sich einenends gegen den Ringbund (16) abstützt, und
- eine Sperrvorrichtung, die die Schraubenfeder (7) in einer vorgespannten Position lösbar zurückhält, umfasst,
wobei in einer gelösten Schraubenfederanordnung die Schraubenfeder (7) an dem in der Nut der Hülse (8) angeordneten Sicherungsring (11) anliegt.

6. Lenkungsanordnung (1) nach Anspruch 5,
**dadurch gekennzeichnet, dass**
an dem Abschnitt des Zwischenstücks (3), der von dem kupplungsseitigen Ende der Hülse (8) umgeben ist, eine radiale Durchtrittsöffnung (13) vorliegt,
und dass die Hülse (8) ein umfänglich orientiertes Langloch (15) aufweist, das über einem Einlass der radialen Durchtrittsöffnung (13) angeordnet ist, und dass die Sperrvorrichtung ein Sicherungssplint (14) ist, der radial in das Langloch (15) eingeführt und die radiale Durchtrittsöffnung (13) durchdringend lösbar positioniert ist.

7. Lenkungsanordnung (1) nach Anspruch 6,
**dadurch gekennzeichnet, dass**
der Lenkspindelanschluss (2) an seinem kupplungsseitigen Ende eine zum Ende hin offene Ausnehmung (17) aufweist, in der der in der Durchtrittsöffnung (13) des Zwischenstücks (3) angeordnete Sicherungssplint (14) führbar ist, wobei die Ausnehmung (17) hinsichtlich ihrer Durchtrittsrichtung in der Stecklage mit der Durchtrittsöffnung (13) des Zwischenstücks (3) fluchtet.

8. Lenkungsanordnung (1) nach Anspruch 7,
**dadurch gekennzeichnet, dass**
die Sperrvorrichtung einen Rastmechanismus umfasst, der in dem Zwischenstück (3) angeordnet ist und der durch eine kupplungsseitige Stirnseite des in das Zwischenstück (3) aufzunehmenden Endes des Lenkspindelanschluss (2) betätigt wird, wobei der Rastmechanismus eine Rastvorrichtung, insbesondere eine Rastnase oder eine Klinke, umfasst, die die Schraubenfeder (7) in der vorgespannten Position hält, und wobei die Betätigung des Rastmechanismus durch die eingeführte Stirnseite des Lenkspindelanschlusses (2) eine Überführung der Schraubenfeder (7) in die gelöste Schraubenfederanordnung bereitstellt.

9. Lenkungsanordnung (1) nach zumindest einem der Ansprüche 1 bis 8,
**dadurch gekennzeichnet, dass**
die zumindest eine Nut (5) des Nut- und Feder-Führungselementepaares (5,6)
- eine Fangvorrichtung aufweist, die durch eine keilförmige Aufweitung der Nut (5) an einer Einführungsöffnung für die Feder (6) oder die durch eine spitz zulaufende Feder (6) gebildet wird, und/oder
- in ihrem Formverlauf mit der Feder (6) korrespondiert, wobei die Nut (5) Doppelkeilform aufweist, die sich bevorzugt über ihre gesamte Länge hinweg erstreckt, und wobei insbesondere die Flanken der Nut (5) in radialer Richtung zur Feder (6) hin schräg auseinander streben und/oder sich die Nut (5) in längsaxialer Richtung ausgehend von der Einführungsöffnung verjüngt.

## Claims

1. Steering assembly (1) comprising a steering shaft with a steering shaft connection (2) joined to a clevis (4) of a steering clutch via a connecting piece (3),
wherein the steering shaft connection (2) and the hub-like connecting piece (3) are designed as plug-in partners at their facing ends by means of at least one tongue-and-groove guide element pair (5, 6) oriented along the longitudinal axis and providing a torque-transmitting positive guidance, wherein a first guide element (5, 6) of the guide element pair (5, 6) is located on the steering shaft connection (2) and a second guide element (5, 6) is located on the connecting piece (3), thereby providing a clamping device clamping the plug-in partners against one another in a plugged position,
**characterised in that**
at least one longitudinally axial groove (5) terminates at the end remote from the connecting piece (3) into an annular groove (10) provided at the steering shaft connection (2), **in that**
the connecting piece (3) supports a sleeve (8), which is movable relative to the connecting piece (3) and which has, at a steering shaft-end side of the sleeve (8), one or more projections (9), which extend radially inwards from the sleeve (8) and in the plugged position engage with the annular groove (10), which forms a stop by way of its clutch-side flank (10'), and **in that**
the clamping device is designed such that it pushes the stops formed by the flank (10') and by the projections (9) against one another.

2. Steering assembly (1) according to claim 1,
**characterised in that**
at least one, preferably several and particularly preferably three, grooves (5) oriented along the longitudinal axis and offset by 120 degrees relative to one another are provided on the cylindrical outside of that end of the steering shaft connection (2) which faces the connecting piece (3), and **in that**
one or more tongues (6) oriented along the longitudinal axis are provided on the connecting piece (3), a groove (5) being provided on the steering shaft connection (2) for each tongue (6).

3. Steering assembly (1) according to claim 2,
**characterised in that**
the projections (9) are designed in the shape of teeth.

4. Steering assembly (1) according to claim 2 or 3,
**characterised in that**
an inner-circumferential groove into which a circlip (11) is installed is provided at the clutch-side end of the sleeve (8), and **in that**
the connecting piece (3) has in the section surrounded by the clutch-side end of the sleeve (8) a stepped taper (12), which forms a stop for the circlip (11) in the plug-in arrangement.

5. Steering assembly (1) according to one or more of claims 1 to 4,
**characterised in that**
the clamping device comprises
- a projecting annular collar (16) extending radially outwards on the connecting piece (3), and
- a coil spring (7), which surrounds the connecting piece (3) and is supported against the annular collar (16) at one end, and
- a locking device which releasably holds the coil spring (7) in a preloaded position,
wherein the coil spring (7) bears against the circlip (11) in the groove of the sleeve (8) in a released coil spring arrangement.

6. Steering assembly (1) according to claim 5,
**characterised in that**
a radial through-opening (13) is provided on the section of the connecting piece which is surrounded by the clutch-side end of the sleeve (8), and **in that**
the sleeve (8) has a circumferentially oriented slot (15), which is placed above an entry of the radial through-opening (13), and **in that**
the locking device is a split pin (14), which is radially inserted into the slot (15) and positioned releasably while penetrating the radial through-opening (13).

7. Steering assembly (1) according to claim 6,
**characterised in that**
the steering shaft connection (2) has at its clutch-side end a recess (17) open towards the end, in which the split pin (14) located in the through-opening (13) of the connecting piece (3) can be guided, wherein the recess (17) is aligned to the through-opening (13) of the connecting piece (3) in the plugged position with respect to its passage direction.

8. Steering assembly (1) according to claim 7,
**characterised in that**
the locking device comprises a latching mechanism, which is located in the connecting piece (3) and which is operated by a clutch-side end face of the end of the steering shaft connection (2) to be inserted into the connecting piece (3), wherein the latching mechanism comprises a latching device, in particular a latching lug or a pawl, which holds the coil spring (7) in the preloaded position, and wherein the operation of the latching mechanism by the inserted end face of the steering shaft connection (2) provides for a transfer of the coil spring (7) into the released coil spring arrangement.

9. Steering assembly (1) according to one or more of claims 1 to 8,
**characterised in that**
the at least one groove (5) of the tongue-and-groove guide element pair (5, 6)
- comprises a safety catch represented by a conical widening of the groove (5) at an insertion opening for the tongue (6) and/or by a tapering tongue (6), and/or
- corresponds in its shape to the tongue (6), wherein the groove (5) has a jaw-type shape which preferably extends along its entire length, and wherein in particular the flanks of the groove (5) run away from one another at an angle in the radial direction towards the tongue (6) and/or the groove (5) tapers in the direction of the longitudinal axis, starting from the insertion opening.

## Revendications

1. Agencement de direction (1), qui comporte un arbre de direction doté d'un raccord (2) d'arbre de direction qui est relié par l'intermédiaire d'un élément intermédiaire (3) à une tête de fourche (4) d'un accouplement de direction, le raccord (2) d'arbre de direction et l'élément intermédiaire (3) conçu en forme de moyeu sur des extrémités se faisant face au moyen d'au moins une paire d'éléments de guidage (5,6) à rainure et languette, qui établit un guidage forcé transmettant le couple, étant conçus comme des partenaire enfichables, sur le raccord (2) d'arbre de direction étant disposé un premier élément de guidage (5, 6) et sur l'élément intermédiaire (3) étant disposé un second élément de guidage (5, 6) de la paire d'éléments de guidage (5, 6), un dispositif de serrage serrant les éléments enfichables dans une position enfichable l'un contre l'autre, **caractérisé en ce qu'**au moins une rainure (5) axiale longitudinale sur son extrémité en regard à l'élément intermédiaire (3) débouchant dans une rainure annulaire (10) se trouvant sur le raccord d'arbre de direction (2), l'élément intermédiaire (3) porte un manchon mobile (8) par rapport à l'élément intermédiaire (3) qui présente sur une extrémité côté arbre de direction du manchon une ou plusieurs parties en saillie (9) s'étendant radialement vers l'intérieur à partir du bord du manchon (8), qui s'insère dans la position enfichable dans la rainure annulaire (10) dont le flanc (10') côté accouplement forme une butée et **en ce que** le dispositif de serrage est conçu de telle sorte qu'il comprime les butées formée par les flancs (10') et les parties en saillie (9) l'un contre l'autre.

2. Agencement de direction (1) selon la revendication 1, **caractérisé en ce que** sur le côté extérieur cylindrique de l'extrémité du raccord (2) d'arbre de direction qui est orienté vers l'élément intermédiaire, est disposé au moins une, de préférence plusieurs, de préférence encore trois rainures (5) orienté dans une direction axiale longitudinale décalées l'une par rapport à l'autre de 120 °, et **en ce que** sur l'élément intermédiaire (3) sont disposés au moins un ou plusieurs ressorts (6) orientés dans la direction axiale longitudinale, une rainure (5) étant présente pour chaque ressort (6) sur le raccord (2) d'arbre de pression.

3. Agencement de direction (1) selon la revendication 2, **caractérisé en ce que** les parties en saillie (9) sont dentiformes.

4. Agencement de direction (1) selon l'une quelconque des revendications 2 ou 3, **caractérisé en ce qu'**il est prévu une rainure sur l'extrémité côté accouplement du manchon (8) disposée sur la périphérie intérieur, dans laquelle est insérée un anneau de sécurité (11) et **en ce que** l'élément intermédiaire (3) présente la section qui est entourée par l'extrémité côté accouplement du manchon (8) qui forme dans l'agencement d'enfichage une butée pour l'anneau de sécurité (11).

5. Agencement de direction (1) selon l'une quelconque des revendications 1 à 4, **caractérisé en ce que** le dispositif de serrage comprend
- un épaulement annulaire (16) faisant saillie qui s'étend radialement vers l'extérieur sur l'élément intermédiaire (3), et
- un ressort de compression (7), qui se situe autour de l'élément intermédiaire (3) et s'appuie d'une part contre l'épaulement annulaire (16), et
- un dispositif de blocage qui retient amovible les ressorts de compression (7) dans une position précontrainte, dans un agencement de ressort de compression libéré le ressort de compression (7) se situe dans l'anneau de sécurité (11) disposé dans la rainure du manchon (8).

6. Agencement de direction (1) selon la revendication 5, **caractérisé en ce que** sur la section de l'élément intermédiaire (3), qui est entouré par l'extrémité côté accouplement du manchon (8), est aménagée une ouverture de passage (13), et **en ce que** le manchon (8) présente un trou oblong (15) orienté vers la périphérie qui est disposée par une admission de l'ouverture de passage radiale (13) et **en ce que** le dispositif de blocage est une goupille de sécurité (14) qui est introduite radialement dans le trou oblong (15) et l'ouverture de passage radiale (13) est positionnée traversante amovible.

7. Agencement de direction (1) selon la revendication 6, **caractérisé en ce que** le raccord d'arbre de direction (2) sur son extrémité côté accouplement présente un évidement (17) ouvert jusqu'à l'extrémité, dans lequel la goupille de sécurité (14) disposée dans l'ouverture de passage (14) peut être introduire, l'évidemment (17) par rapport à sa direction de passage dans la position enfichable coïncide avec l'ouverture de passage (13) de l'élément intermédiaire (3).

8. Agencement de direction (1) selon la revendication 7, **caractérisé en ce que** le dispositif de blocage comprend un mécanisme d'arrêt qui est disposé dans l'élément intermédiaire (3) et qui est actionné par une face avant côté accouplement de l'extrémité logée dans l'élément intermédiaire (3) du raccord d'arbre de direction (2), le mécanisme d'arrêt comprend un dispositif d'arrêt, en particulier un nez d'arrêt ou un loquet qui retient les ressorts de compression (7) dans la position précontrainte, et l'actionnement du mécanisme d'arrêt met à disposition par la face avant introduite du raccord d'arbre de direction (2) une transmission du ressort de compression (7) dans l'agencement de ressort de compression libéré.

9. Agencement de direction (1) selon l'une quelconque des revendications 1 à 8, **caractérisé en ce que** l'au moins une rainure (5) de la paire d'élément de guidage rainure et ressort (5,6)
- comprend un dispositif antichute qui est formé par un élargissement conique de la rainure (5) sur une ouverture d'introduction pour les ressort (6) ou le ressort (6) s'étendant par une goupille, et/ou
- correspond dans sa forme au ressort (6), la rainure (5) présentant une forme de double clavette qui s'étend de préférence sur toute sa longueur et en particulier les flancs de la rainure (5) confluent séparément obliquement dans la direction des ressorts (6) et/ou la rainure (5) s'amincit dans la direction axiale longitudinale à partir de l'ouverture d'introduction.
